# EUROPÄISCHE PATENTSCHRIFT

(11) **EP 2 052 904 B1**
(45) Veröffentlichungstag und Bekanntmachung des Hinweises auf die Patenterteilung: **08.12.2010**
(21) Anmeldenummer: 08017891.6
(22) Anmeldetag: 13.10.2008
(51) Int. Cl.: B60N 2/56, H05B 3/34

(54) **Heizelement für Fahrzeugsitze oder Lenkräder sowie Verfahren zum Herstellen des Heizelements**
Heating element for vehicle seats or steering wheels and method of producing the heating element
Elément de chauffage pour sièges de véhicule ou volants ainsi que procédé de fabrication de l'élément de chauffage

(30) Priorität: 25.10.2007 DE 102007051421
(43) Veröffentlichungstag der Anmeldung: 29.04.2009
(73) Patentinhaber: I.G. Bauerhin GmbH, 63584 Gründau (DE)
(72) Erfinder: Marschall, Torsten, 63584 Gründau-Rothenbergen (DE); Klundt, Waldemar, 63579 Freigericht-Somborn (DE)
(74) Vertreter: Grimm, Ekkehard

(56) Entgegenhaltungen:
- WO-A-00/25069
- DE-A1- 3 820 750
- DE-A1- 4 124 684
- DE-A1- 10 236 554
- DE-A1-102005 037 829
- DE-A1-102006 004 145
- DE-B3-102005 050 459
- DE-B3-102006 018 063

## Beschreibung

Die vorliegende Erfindung betrifft ein Heizelement für Fahrzeugsitze oder Lenkräder gemäß dem Oberbegriff des Anspruchs 1. Weiterhin betrifft die Erfindung ein Verfahren gemäß dem Oberbegriff des Anspruchs 7.

Sitzheizungen zählen inzwischen zur Standardausstattung von Personenkraftwagen. Auch werden zunehmend Lenkräder beheizt. Für solche Heizungen von Sitzen und Lenkrädern werden Fiächenheizelemente eingesetzt. Grundsätzlich sind derartige Heizelemente aus mindestens zwei sich gegenüberliegenden Kontaktleisten für die Stromzu- und -abführung und aus Heizleitern, die in vorgegebenem Muster zwischen den Kontaktleisten verlaufen und mit diesen in elektrischem Kontakt stehen, aufgebaut. Eine solche Kontaktleiste kann aus mehreren voneinander beabstandeten Kontaktleiterlitzen bestehen. Sowohl Kontaktleiterlitzen als auch Heizleiter sind auf einem flexiblen Trägermaterial, beispielsweise einem geeigneten Stoff, aufgebracht. Die Kontaktleisten werden üblicherweise in Form von gewirkten oder gewebten Bändern eingesetzt. Hierzu werden elektrische Leiter zusammen mit textilen Fäden gewirkt oder verwebt oder aber die Leiter werden auf das Band aufgenäht, so dass sich eine bandartige Struktur mit den in Bandrichtung verlaufenden elektrischen Leitern ergibt. Diese Bänder, die die Kontaktieiterlitzen tragen, werden dann auf das textile Grundmaterial aufgenäht oder aufgeklebt; hierzu weisen die Bänder bereits einen eingearbeiteten Kleber auf oder das Grundmaterial trägt an den entsprechenden Stellen eine entsprechende Klebeschicht.

Ein Nachteil solcher Heizelemente, bei denen die Kontaktleisten in Form von Bändern auf dem Grundmaterial aufgebracht werden, ist derjenige, dass diese Bandstrukturen auf dem Grundmaterial eine Verdickung darstellen, die gerade an diesen Stellen die Struktur des Grundmaterials stark verändern; so kann es auftreten, dass sich diese Bandstrukturen auf der Sitzfläche abzeichnen, insbesondere dann, wenn diese Flächen des Sitzes, insbesondere die Sitzflächen, mit einem weichen Leder bezogen sind. Des Weiteren ergeben sich aus der textilen Befestigung auf dem Band (Wirken, Weben oder Aufnähen) Probleme bei der Kontaktierung der Kontaktleiterlitzen mit den Heizleitern, da textile nicht leitende Fäden zwischen Heizleiter und Kontaktleiterlitzen liegen können, welche den Stromfluss behindern können.

Aus den vorstehenden Gründen besteht ein Bestreben dahingehend, die Kontaktleisten bzw. die Kontaktleiterlitzen auf dem textilen Grundmaterial anzuordnen, ohne die Bänder zu verwenden, die eine Unebenheit darstellen. Daher schlägt die DE 10 2006 018 063 B3 ein Verfahren zum Herstellen eines elektrischen Flächenheizelements vor, bei dem die Kontaktleiterlitzen direkt in das textile, flexible Trägermaterial eingearbeitet werden. Für das Einziehen der Kontaktleiterlitzen in das Trägermaterial wird ein spezielles Werkzeug, das zwei Backenpaare aufweist, eingesetzt. Jedes Backenpaar weist Kanäle, entsprechend der Anzahl der einzuziehenden Kontaktleiterlitzen, sowie senkrecht dazu eingearbeitete Vertiefungen auf. Zwischen den Backen jedes Backenpaars wird dann das textile Trägermaterial eingespannt, wonach die Kontaktleiterlizen jeweils durch die einzelnen Kanäle gezogen werden. Im Bereich der Vertiefungen, die quer zu diesen Kanälen verlaufen, ist das zwischen den Backen eingeklemmte Trägermaterial zu einer Falte gelegt, die durch die Kontaktleiterlitze durchstochen wird, so dass die Kontaktleiterlitzen im Bereich dieser Falte dann das Trägermaterial, wenn das Trägermaterial zwischen den Backen der Backenpaare freigegeben wird, von der Oberseite zur Unterseite und wieder von der Unterseite zur Oberseite durchdringen und somit gehalten werden. Entlang der Backenpaare ist eine Vielzahl von solchen Vertiefungen ausgebildet, um an dem Trägermaterial eine entsprechende Vielzahl von Haltepunkten für die Kontaktleiter bzw. Kontaktleisten zu bilden. Dieses Verfahren zeigt gute Ergebnisse dahingehend, dass die Kontaktleiterlitzen in das Trägermaterial eingearbeitet werden können, ohne dass sie zu einer wesentlichen Verdickung an den entsprechenden Stellen beitragen, wie dies beispielsweise dann der Fall ist, wenn Kontaktleiterlitzen verwendet werden, die zuvor auf Bändern aufgebracht sind. Allerdings ist ein solches Verfahren, das Backen einsetzt, um die Kontaktleiterlitzen in das Trägermaterial einzuziehen, mit einem gewissen Zeitaufwand verbunden.

Die DE 10 2005 050 459 B3 beschreibt einen gattungsgemäßen Stand der Technik in Form eines Heizelements, aber auch das Verfahren zur Herstellung eines solchen Heizelements, das neben den Heizleitern auch mindestens zwei zueinander beabstandete Kontaktleiterlitzen aufweist. Bei einem solchen Heizelement werden die Kontaktleiter jeweils zunächst auf einem textilen Band angeordnet; die Bänder werden dann ihrerseits mit Abstand zueinander auf einem Trägermaterial aufgebracht und verklebt und damit fixiert. Anschließend werden zwischen diesen beiden Kontaktleitern, die der Stromzu- und Stromabführung dienen, die Heizleiter angeordnet und mittels Nähwirktechnik oder Wirktechnik auf dem Trägermaterial befestigt; gleichzeitig werden sie auch über die Kontaktieiter gelegt und dort ebenfalls mit dem Faden durch die Nähwirktechnik oder Wirktechnik fixiert.

Die DE 10 2005 050 459 B3 beschreibt zusätzlich ein flexibles Flächenheizelement, bei dem die Kontaktleisten einen Anteil an Leitern in Form von Stahlfilamenten und einen Anteil an Leitern in Form von Filamenten einer höheren Leitfähigkeit als die Stahlfilamente enthält. Beide Leiterarten sind elektrisch untereinander verbunden und mittels textiler und/oder metallischer Fäden auf einem textilen Band gehalten. Die Leiter höherer Leitfähigkeit verlaufen wellen- oder mäanderförmig derart, dass sie die jeweiligen Stahlleiter kreuzen.

Die DE 10 2005 037 829 A1 beschreibt ein Heizelement, das einen flächigen Träger, beispielsweise ein Textil (Gewirke oder Vliese), aufweist, auf dem mindestens ein elektrischer Heizleiter in Wellenform verlegt ist. Die Enden weisen Anschlussstellen für elektrische Verbindungen auf. Der Träger ist mit einer klebefähigen Substanz überzogen, bei der es sich beispielsweise um einen thermisch aktivierbaren Kleber handeln kann. Um den wellenförmig verlegten Heizleiter überhaupt auf den Träger in einer solchen Wellenform so aufzulegen und zu fixieren, dass er seine Form beibehält, wird der elektrische Heizleiter mit Fäden zumindest an den Amplituden-Maxima vorfixiert, bevor erst dann mit der klebefähigen Substanz der Heizleiter zwischen den durch den Nähfaden fixierten Stellen an dem Träger verbunden wird.

Die DE 10 2006 004 145 A1 beschreibt ein elektrisches Heizelement, das Heizleiter umfasst, die sich in dem gezeigten Beispiel in drei Strängen zwischen elektrischen Anschlussstellen erstrecken. Diese Heizleiter sind auf einem Träger, vorzugsweise ein Textil, aufgelegt; sie werden bei der Herstellung dieses Heizelements zunächst an dem Träger mit einem Hilfsfaden lokal fixiert, bevor dann das auf dem Träger vorhandene klebefähige Material durch Wärme aktiviert wird, um den Heizleiter über seine gesamte Länge zu fixieren.

Die DE 38 20 750 A1 beschreibt ein Verfahren zum Herstellen eines flächigen Heizelements, insbesondere für Autositzheizungen, sowie ein nach dem Verfahren hergestelltes flächiges Heizelement. Unter anderem wird angegeben, Heizleiter an einem Träger punktförmig oder nur längs des Heizleiters linienförmig mittels Klebung zu fixieren, bevor eine weitere überdeckende Schicht aufkaschiert wird.

Die DE 41 24 684 A1 beschreibt ein Flächenheizelement und ein Verfahren zu seiner Herstellung, wobei das Flächenheizelement im Wesentlichen parallel angeordnete Heizdrähte besitzt, die an ihren Enden mit Stromzuführungsleitern elektrisch verbunden sind. Jeder der Stromzuführungsleiter ist als flexible Kontaktierungsleiste mit mehreren Einzelleitern ausgebildet, die mit den Heizdrähten elektrisch parallel geschaltet sind. Das Flächenheizelement ist in einem elastischen Trägermaterial integriert. Verfahrensgemäß werden die Heizdrähte mit den Kontaktierungsleisten verklebt, verschweißt, verpresst oder formschlüssig verbunden.

Die DE 102 36 554 A1 beschreibt einen Heizleiter, der aus einem metallischen Leiter und einer diesen zumindest teilweise umhüllenden Ummantelung aus Kunststoff besteht. Zumindest ein Teil der Ummantelung soll aus einem thermisch aktivierbaren Kleber bestehen.

Ausgehend von dem vorstehend beschriebenen Stand der Technik liegt der vorliegenden Erfindung die Aufgabe zugrunde, ein Heizelement für Fahrzeugsitze oder Lenkräder sowie ein entsprechendes Verfahren zur Herstellung eines solchen Heizelements anzugeben, die ein direktes Anordnen der Kontaktleiterlitzen auf einem Trägermaterial, d. h. ohne die Verwendung von Bändern, in ökonomischer Weise ermöglichen; es soll auch die Möglichkeit gegeben sein, unterschiedliche Verlaufsmuster solcher Kontaktleisten herzustellen, auch dann, wenn eine Vielzahl von Kontaktleiterlitzen nebeneinander angeordnet werden soll.

Diese Aufgabe wird durch ein Heizelement für Fahrzeugsitze oder Lenkräder gemäß Anspruch 1 und verfahrensgemäß durch ein Verfahren gemäß Anspruch 7 gelöst.

Dadurch, dass die Kontaktleiterlitzen mittels Schmelzkleber direkt auf das Trägermaterial aufgeklebt sind, ergibt sich eine sehr glatte, flache Oberflächenstruktur. Um die Kontaktleiterlitzen sicher auch bei starken Beanspruchungen, beispielsweise im Bereich einer Sitzfläche als Sitzflächenheizung, zu sichern, werden die zwischen den Kontaktleiterlitzen verlaufenden Heizleiter über Maschenfäden fest an die Kontaktleiterlitzen angedrückt. Gleichzeitig ist dadurch ein guter elektrischer Kontakt zwischen den Kontaktleiterlitzen und den Heizleitern sichergestellt, da keine störenden Fäden oder Fasern zwischen Heizleitern und Kontaktleiterlitzen liegen.

Verfahrensgemäß wird der Schmelzkleber, der die Kontaktleiterlitzen an dem Trägermaterial hält, zunächst auf dem Trägermaterial in einem punkt- oder linienförmigen Muster auf-gebracht. Anschließend werden die Kontaktleiterlitzen an das Trägermaterial angedrückt, wozu eine entsprechende Auflageplatte verwendet wird, auf der das Trägermaterial aufgelegt ist, und das Andrücken durch eine entsprechende Gegenplatte erzeugt wird. Um den Schmelzkleber zu schmelzen und damit die Kontaktleiterlitzen an dem Trägermaterial zu befestigen, wird direkt durch die Kontaktleiterlitzen Strom geführt, so dass sich die Kontaktleiterlitzen aufheizen. Nachdem der Schmelzkleber erstarrt ist, werden über den Kontaktleiterlitzen Heizleiter mittels Näh- oder Wirktechnik aufgebracht. Die Heizleiter berühren dabei die Kontaktleiterlitzen. Gleichzeitig werden die Heizleiter durch Maschenfäden im Bereich der Kontaktleiterlitzen an diese angedrückt.

Das vorstehend angegebene Verfahren kann insbesondere für die Massenfertigung solcher Heizelemente eingesetzt werden. Es ergibt sich ein stabiler Aufbau, insbesondere in dem Kontaktbereich zwischen Heizleiter und Kontaktleiste, da eine dauerhafte Verbindung zwischen Heizleiter und Kontaktleiterlitzen durch die Maschenfäden erzielt wird. Auch ist es möglich, praktisch jedes beliebige Muster der Kontaktleisten und/oder der Heizleiter auf dem Trägermaterial herzustellen, um das Heizelement in seiner Form einem zu beheizenden Sitz oder einem zu beheizenden Lenkrad anzupassen.

Weitere Mermale der Erfindung sind in den abhängigen Ansprüchen beschrieben.

In einer Ausführungsform können die Kontaktleisten bzw. deren Kontaktleiterlitzen wellenförmig, zickzackförmig oder mäanderförmig verlaufen.

Mehrere jeweils parallel zueinander verlaufende Kontaktleiterlitzen können auf dem Trägermaterial so aufgebracht werden, dass diese parallel verlaufen und zusammen eine Kontaktleiste bilden, mit der der Heizleiter verbunden wird. Die Verfahrensweise, um diese Kontaktleiterlitzen auf dem Trägermaterial anzuordnen, muss dadurch nicht in ihren Grundzügen verändert werden.

Vorzugsweise sollte der Schmelzkleber in einem Punktmuster auf das Trägermaterial zumindest in dem Bereich der Kontaktleisten aufgebracht werden. Ein alternatives Muster für den Schmelzkleber ist dasjenige von Linien. Es sollte darauf geachtet werden, dass benachbarte Punkte oder Linien des Schmelzklebers in einem Abstand voneinander beabstandet sind, der geringer als der Durchmesser der Kontaktleiterlitzen ist, so dass stets gewährleistet ist, dass die auf das Trägermaterial aufgelegten Kontaktleiterlitzen mit den Punkten oder Linien in Berührung stehen, um die Kontaktleiterlitzen dann, nach Erwärmen des Schmelzklebers, an dem Trägermaterial anzukleben.

Für die Kontaktleiterlitzen sollten metallische Litzen mit einem Durchmesser von 50 µm bis 200 µm eingesetzt werden. Darüber hinaus sollten die Kontaktleiterlitzen vorzugsweise aus 10 bis 200 Einzelfilamenten zusammengesetzt sein, wobei jedes Einzelfilament einen Durchmesser von 5 µm bis 100 µm haben sollte.

Solche Kontaktleiterlitzen lassen sich mit dem angegebenen Verfahren sehr gut verarbeiten, insbesondere dann, wenn die Kontaktleiterlitzen in einem Verlauf, der von einer geraden Linie abweicht, auf dem Trägermaterial angeordnet werden sollen.

Als Schmelzkleber eignet sich ein Polyester-Kleber oder ein Polyamid-Kleber.

Als Trägermaterial sollte ein Gewebe, Vlies oder Gewirke verwendet werden, das in jedem Fall luftdurchlässige und atmungsaktive Eigenschaften haben sollte.

Um Heizelemente, wie sie vorstehend angegeben sind, herzustellen, sollte eine Anordnung eingesetzt werden, bei der das Trägermaterial auf eine Unterlage aufgelegt wird. Von der Unterseite aus werden dann durch das Trägermaterial Nadeln gesteckt, um die herum die Kontaktleiterlitzen auf der Oberseite des Trägermaterials wellenförmig, zickzackförmig oder mäanderförmig gelegt werden. Anschließend wird das Trägermaterial durch eine Druckplatte gegen die Unterlage gedrückt; die Druckplatte sollte aus einem Material bestehen, in das die durch die Unterlage und das Trägermaterial hindurch vorstehenden Nadeln eindringen können, so dass das Trägermaterial flach zwischen der Unterlage und der Druckplatte gehalten ist.

In dieser fixierten Stellung des Trägermaterials zwischen der Unterlage und der Druckplatte kann dann Strom durch die Kontaktleiterlitzen geleitet werden, um den Schmelzkleber zu erwärmen. Falls mehrere Kontaktleiterlitzen zu einer Kontaktleiste zusammengefasst werden sollen, werden, nachdem die Kontaktleiterlitzen auf das Trägermaterial aufgelegt sind und bevor Strom hindurchgeleitet wird, diese in einer vorbestimmten Länge abgeschnitten, die abgeschnittenen Enden zusammengebündelt und dann über die zusammen gebündelten, abgeschnittenen Enden die Stromverbindung hergestellt.

Für den Einbau des Flächenheizelements, beispielsweise in einen Sitz, ist es erforderlich, dass die Enden der Kontaktleiterlitzen bzw. der Kontaktleisten zu den jeweiligen Anschlussstellen im Sitz geführt werden können. Darüber hinaus sollte das Trägermaterial einen Randbereich haben, der frei von den elektrischen Leitern ist, um das Trägermaterial mittels dieses freien Randbereichs in einem Sitz zu befestigen. Um einen solchen freien Randbereich zu erhalten, werden die Kontaktleiterlitzen im Bereich ihrer Enden während des Andrückens an das Trägermaterial mit einer Wärmesenke zur Abfuhr von Wärme angedrückt, so dass dort auf dem Trägermaterial befindlicher Schmelzkleber nicht aufschmilzt und somit keine Verbindung der Kontaktleiterlitzen an dem Trägermaterial erfolgt, auch wenn dort Schmelzkleber vorhanden sein sollte. Als Wärmesenke kann eine Metallplatte verwendet werden, die beispielsweise in die Druckplatte integriert ist und ausreichend Wärme beim Andrücken der Kontaktleiterlitzen an die Unterlage und beim Aufheizen der Kontaktleiterlitzen abführt. Der Schmelzkleber könnte auch auf die Kontaktlekerlitzen aufgebracht werden.

Das Trägermaterial mit den darauf aufgebrachten Kontaktleisten und Heizleitern kann mit einer Decklage abgedeckt werden; um eine solche Decklage an dem Trägermaterial zu befestigen, kann der auf dem Trägermaterial vorhandene Schmelzkleber genutzt werden, indem unter Zufuhr von Wärme und unter Aufschmelzen des Schmelzklebers die Decklage mit dem Trägermaterial verbunden wird.

Um den Verbrauch an Schmelzkleber möglichst gering zu halten, kann der Schmelzkleber in dem Bereich zwischen den Kontaktleisten in einem Punktmuster und/oder Linienmuster aufgebracht werden, bei dem die einzelnen Punkte oder Linien weiter beabstandet sind als die Punkte oder Linien im unmittelbaren Bereich der Kontaktleiterlitzen.

Weitere Einzelheiten und Merkmale der Erfindung ergeben sich aus der nachfolgenden Beschreibung eines Ausführungsbeispiels anhand der Zeichnung. In der Zeichnung zeigt
- Figur 1: eine perspektivische schematische Ansicht einer Anordnung, um Kontaktlei- terlitzen auf einem Trägermaterial aufzubringen,
- Figur 2: eine schematische Seitenansicht der Anordnung der Figur 1, allerdings mit einer zusätzlichen Verlegeeinheit für die Kontaktleiterlitzen und Elektroden, um die Kontaktleiterlitzen für eine Stromzufuhr zu kontaktieren,
- Figur 3A: eine Draufsicht auf ein Heizelement mit wellenförmig verlaufenden Kontakt- leiterlitzen bzw. Kontaktleisten und zwischen den Kontaktleisten verlaufen- den Heizleitern, und
- Figur 3B: einen Längsschnitt durch das Heizelement, wie es in Figur 3A gezeigt ist, entlang der Schnittlinie IIIB-IIIB in Figur 3A.

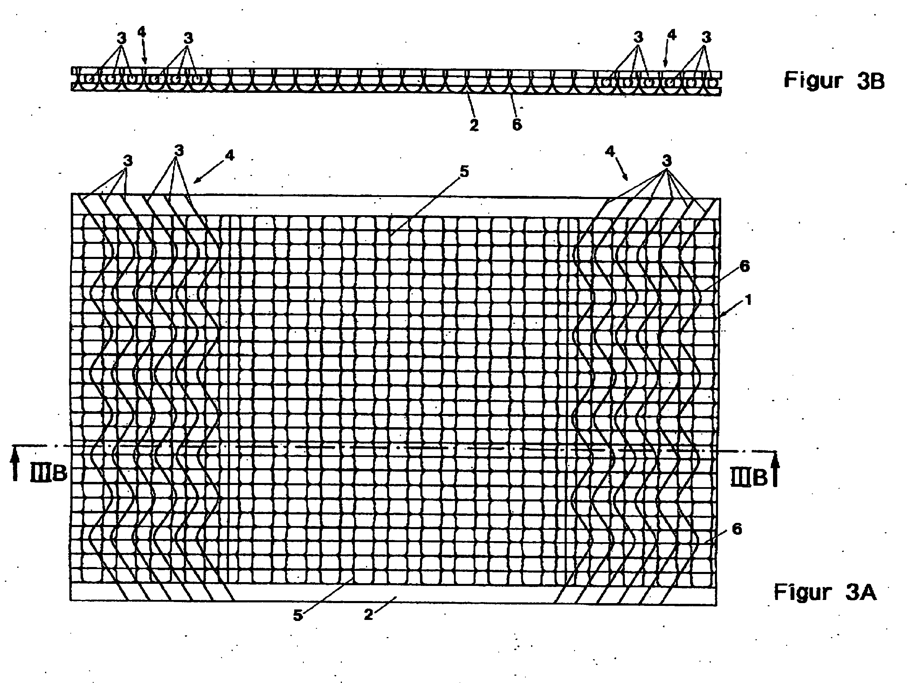

Ein Heizelement entsprechend einer Ausführungsform ist in den Figuren 3A und 3B gezeigt. Ein solches Heizelement, das mit dem Bezugszeichen 1 bezeichnet ist, ist für Fahrzeugsitze oder Lenkräder geeignet. Es weist ein flexibles, textiles Trägermaterial 2 auf, bei dem es sich um einen luftdurchlässigen Baumwollstoff oder ein Vlies handeln kann. Wesentlich ist, dass dieses Trägermaterial 2 atmungsaktiv dann ist, wenn das Heizelement 1 zum Beheizen einer Sitzfläche eines Sitzes oder einer Rückenlehne eines Sitzes verwendet wird,

Auf dem Trägermaterial 2 befinden sich, im Bereich der zwei gegenüberliegenden Seiten, mehrere parallel zueinander verlaufende Kontaktleiterlitzen 3, die jeweils zu einer Kontaktleiste 4 zusammengefasst sind. Zwischen den Kontaktleiterlitzen 3 verlaufen Heizleiter 5, die das Feld der Trägermaterials 2 zwischen den Kontaktleisten 4 ausfüllen. Diese Heizleiter 5 sind über die Kontaktleiterlitzen 3 zu dem äußeren Rand des Trägermaterials 2 geführt und stehen in elektrischem Kontakt mit den Kontaktleiterlitzen 3. Um die Heizleiter 5 einerseits an dem Trägermaterial 2 zu halten und darüber hinaus im Bereich der Kontaktleiterlitzen 3 an diese anzudrücken, sind die Heizleiter 5 insbesondere im Bereich der Kontaktleiterlitzen 3 durch einen Näh- oder Wirkfaden 6 an die Kontaktleiterlitzen 3 angedrückt und fixiert.

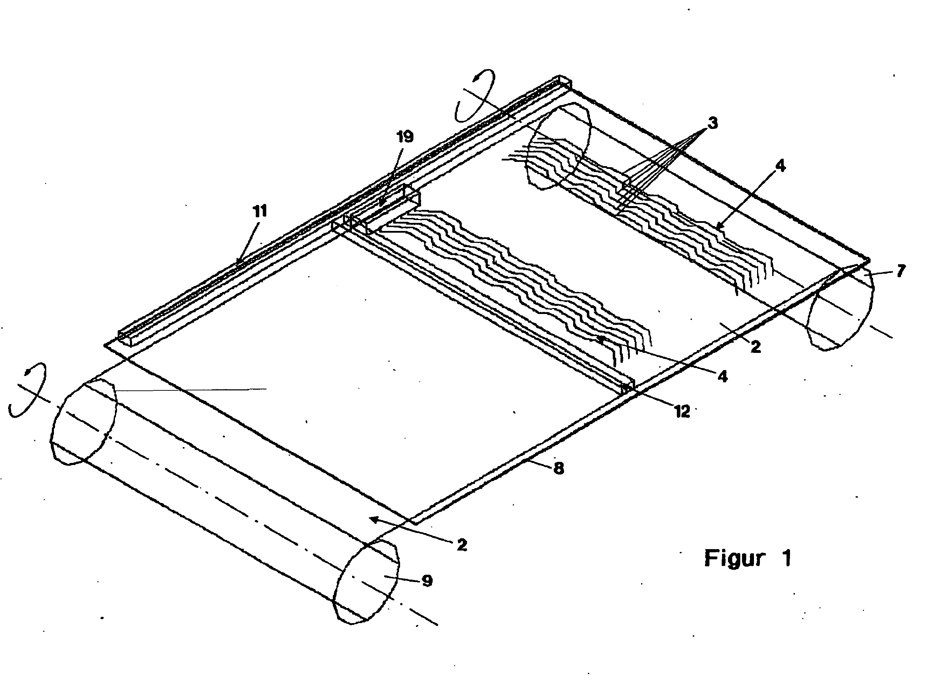

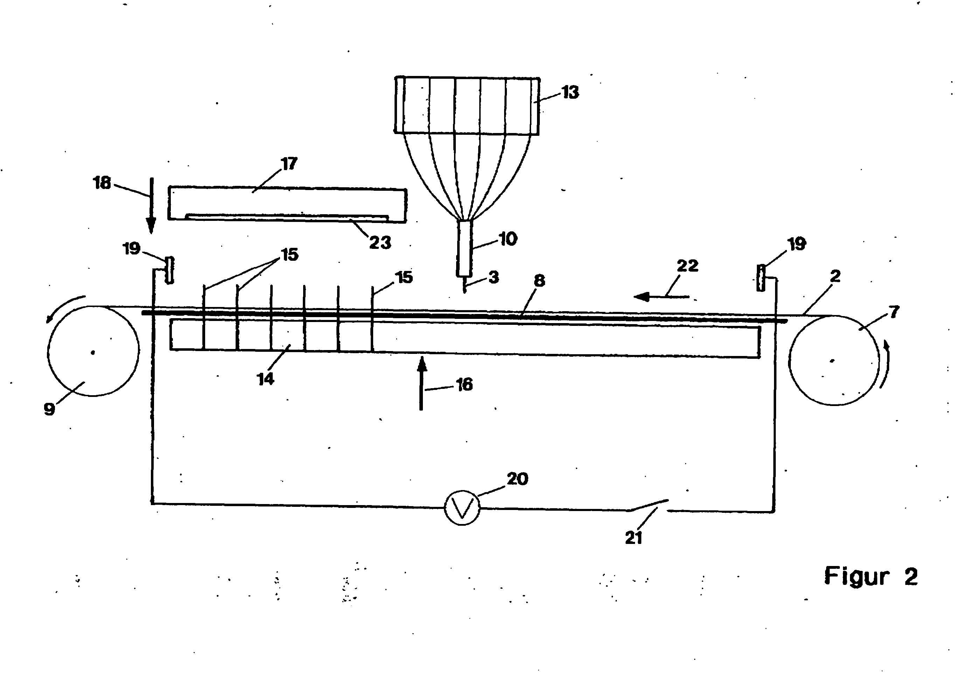

Um die Kontaktleiterlitzen 3 auf das Trägermaterial 2 aufzubringen, wird eine Vorrichtung eingesetzt, die in Figur 1 und in Figur 2 schematisch dargestellt ist.

Die Vorrichtung der Figuren 1 und 2 umfasst eine Vorratsrolle 7 mit Trägermaterial 2, das über eine als Unterlage dienende Auflageplatte 8 geführt ist und auf der gegenüberliegenden Seite durch eine Aufnahmerolle 9 aufgewickelt wird. Dieses Trägermaterial 2, wie es auf der Vorratsrolle 7 bevorratet ist, ist auf seiner Oberseite, d. h. auf derjenigen Seite, die der Auflageplatte 8 abgewandt ist, mit einem Punkt- oder Linienmuster aus einem Klebemittel, beispielsweise einem Schmelzkleber, versehen. Oberhalb der Auflageplatte 8 befindet sich eine Verlegeeinheit 10, die an einer Führungseinheit für die X-Richtung 11 und eine Führungseinheit für die Y-Richtung 12 geführt ist. Mit der X-Richtung ist die Laufrichtung des Trägermaterials 2 bezeichnet, während die Y-Richtung senkrecht dazu liegt, d. h. in der Querrichtung des Trägermaterials 2.

Wie anhand der Figur 2 zu erkennen ist, umfasst die Verlegeeinheit 10 einen Drahtvorratsspeicher 13, in dem das Drahtmaterial für die auf das Trägermaterial 2 aufzubringenden Kontaktleiterlitzen 3 bevorratet ist.

Um die Kontaktleiterlitzen 3 in dem Muster, wie es in Figur 3A zu sehen ist, auf das Trägermaterial 2 aufzulegen, wird, nachdem das Trägermaterial 2 entsprechend oberhalb der Auflageplatte 8 positioniert ist, von der Unterseite der Auflageplatte 8 aus, eine Nadelplatte 14, die einzelne Nadeln 15 aufweist, die von deren oberen Seite senkrecht hoch stehen, in Richtung des Pfeils 16 nach oben gefahren, so dass die Nadeln 15 die Auflageplatte 8 durchstechen; für diesen Zweck ist die Auflageplatte 8 zumindest in dem Bereich der Nadeln 15 aus einem Silikongummi oder einem anderen durchstechbaren und wärmebeständigen Material gebildet. Diese Nadeln 15 sind an Stellen positioniert, die den jeweiligen Wellenbergen und Wellentälern der wellenförmig verlaufenden Kontaktleiterlitzen 3 der Figur 3A entsprechen. Nachdem die Nadeln 15 durch das Trägermaterial 2 hindurchgeführt sind und von der Oberseite vorstehen, wie dies die Figur 2 zeigt, wird die Kontaktleiterlitze 3 aus der Verlegeeinheit 10 herausgeführt und um die einzelnen Nadeln 15 in einem wellenförmigen Muster (Figur 3A) herumgelegt. Insgesamt werden für die Kontaktleiste 4 des Heizelements 1, wie es die Figur 3A zeigt, sechs parallel zueinander verlaufende Kontaktleiterlitzen 3 mittels der Verlegeeinheit 10 aufgelegt, wozu jeweils die Verlegeeinheit 10 über die beiden Führungseinheiten 11, 12 zu den entsprechenden Positionen verfahren wird.

Nachdem die sechs Kontaktleiterlitzen 3 auf das Trägermaterial 2 aufgelegt sind, wird die Verlegeeinheit 10 aus dem Bereich der Kontaktleiterlitzen 3 herausgefahren und es wird eine Gegendruckplatte 17 in Richtung des Pfeils 18 abgesenkt, bis sie die Kontaktleiterlitzen 3 gegen das Trägermaterial 2 und die Auflageplatte 8 andrückt. Die Gegendruckplatte 17 ist in den Bereichen, in denen sich die Nadeln 15 befinden, ebenfalls aus einem Silikongummi gebildet, so dass die Nadeln 15 in diesen Silikongummi eindringen können. Anschließend werden die Kontaktleiterlitzen 3 an ihren abgeschnittenen Enden zusammen gebündelt und über jeweilige Elektroden 19 kontaktiert, die in Figur 2 dargestellt sind (in Figur 1 ist zur besseren Deutlichkeit nur eine dieser Elektroden 19 gezeigt).

Dann werden diese Elektroden 19 an eine Spannungsquelle 20 angelegt, indem, wie schematisch in Figur 2 gezeigt ist, ein entsprechender Schalter 21 geschlossen wird. Hierdurch werden die Kontaktleiterlitzen 3 erwärmt, so dass der in dem Punkt- oder Linienmuster auf dem Trägermaterial aufgebrachte Schmelzkleber erweicht. Wenn der erforderliche Erweichungspunkt des Schmelzklebers (der nicht gezeigt ist) erreicht ist, wird der Schalter 21 wieder geöffnet, so dass sich der Schmelzkleber wieder abkühlen kann. Nachdem der Schmelzkleber abgefühlt ist, sind die Kontaktleiterlitzen 3 an Stellen, an denen sie mit den Punkten oder Linien des Schmelzklebers in Kontakt stehen, an dem Trägermaterial 2 fixiert. Anschließend wird die Gegenplatte 7 wieder von der Auflageplatte 8 abgehoben, die Nadelplatte 14 wird abgesenkt, so dass die Nadeln 15 aus dem Trägermaterial 2 herausgezogen werden, und das Trägermaterial 2 wird in Richtung des Pfeils 22 so weit vorgeschoben, dass der Bereich des Trägermaterials 2, auf dem die nächste Kontaktleiste 4 aus den Kontaktleiterlitzen 3 angeordnet werden soll, in den Arbeitsbereich der Verlegeeinheit 10 gelangt.

In der vorstehend beschriebenen Art und Weise werden nach und nach auf die Bahn aus dem Trägermaterial 2 entsprechende Kontaktleisten 4 aufgebracht. Anschließend wird die Rolle 9 des Trägermaterials 2 zu einer Näh- oder Wirkstation gebracht, um dann in Näh- oder Wirktechnik die Heizleiter 5 zwischen jeweils zwei benachbarten Kontaktleisten 4 aufzubringen. Die Heizleiter 5 werden dabei über die Kontaktleiterlitzen 3 geführt, so dass sie in einem elektrischen Kontakt mit diesen stehen. Gleichzeitig werden mittels Wirk- oder Nähtechnik die Heizleiter 5 durch Maschenfäden im Bereich der Kontaktleiterlitzen 3 an diese angedrückt, so dass diese Heizleiter 5 an den Kontaktleiterlitzen 3 fixiert und sicher gehalten sind. Schließlich wird auf das so vorbereitete Trägermaterial 2 mit den Kontaktleiterlitzen 3 und den Heizleitern 5 eine nicht näher dargestellte Deckschicht aufgebracht, so dass die elektrisch leitenden Teile ausreichend abgedeckt sind.

Um die jeweiligen Heizelemente 1 mit Außenanschlüssen zu versehen, kann es erforderlich sein, dass die Endbereiche der Kontaktleiterlitzen 3 nicht über den Schmelzkleber mit dem Trägermaterial 2 verbunden werden dürfen. Um solche Zonen zu bilden, in denen gerade die Endbereich der Kontaktleiterlitzen 3 nicht mit dem Trägermaterial 2 durch den Schmelzkleber verbunden werden, sind in der Gegendruckplatte 15, die in Figur 2 gezeigt ist, an diesen entsprechenden Stellen Metallplatten 23 eingelassen, die als Wärmesenken dienen, wenn die Gegendruckplatte 17 auf dem Trägermaterial 2 aufgelegt sind. Beim Erwärmen der Kontaktleiterlitzen 3, um den Schmelzkleber auf zu schmelzen, wird im Bereich dieser Metallplatten 23 Wärme abgeführt, so dass der Schmelzkleber nicht seinen Schmelzpunkt erreicht und seine Klebewirkung entfaltet. Somit bleiben, durch den Einsatz dieser Metallplatten 23 (oder entsprechender Wärmesenken, die in anderer Weise ausgeführt sind), die Kontaktleiterlitzen 3 unterhalb dieser Metallplatten 23 nicht mit dem Trägermaterial 2 verbunden, so dass sie als Anschlussleitungen aus dem Heizelement 2 herausgeführt werden können.

Mit der angegebenen Vorrichtung, wie sie in den Figuren gezeigt ist, können die Kontaktleiterlitzen 3, zum Bilden der Kontaktleisten 4, sehr effektiv auf dem Trägermaterial 2 angeordnet werden. Auch ist es, durch entsprechende Anordnung der Nadeln 15 in der Nadelplatte 14, möglich, die Kontaktleiterlitzen 3 bzw. die Kontaktleisten 4 in unterschiedlichsten Mustern auf dem Trägermaterial 2 aufzubringen. Um das Muster zu ändern, muss zum einen die Positionierung der Nadeln 15 in der Nadelplatte 14 verändert werden, zum anderen muss die Verlegeeinheit 10 so programmiert werden, dass sie die Kontaktleiterlitzen 3 um die jeweiligen Nadeln 15 führt. Da die Anordnung, um die Verlegeeinheit 10 oberhalb der Auflageplatte 8 zu verfahren, eine einfache X-Y-Positionierungsanordnung einsetzt, ist eine einfache und schnelle Programmierung möglich.

## Patentansprüche

1. Heizelement für Fahrzeugsitze oder Lenkräder mit einem textilen, flexiblen Trägermaterial, auf dem gegenüberliegende Kontaktleisten aus mindestens zwei zueinander beabstandeten Kontaktleiterlitzen und mehrere zwischen diesen verlaufende und mit diesen in elektrischem Kontakt stehende mittels Wirk- oder Nähwirktechnik aufgebrachte Heizleiter angeordnet sind und wobei die mehreren Heizleiter (5) durch Maschenfäden im Bereich der Kontaktleiterlitzen (3) an diese angedrückt sind, **dadurch gekennzeichnet, dass** die einzelnen Kontaktleiterlitzen (3) mittels eines auf dem Trägermaterial aufgebrachten Schmelzklebers direkt auf das Trägermaterial (2) aufgeklebt sind.

2. Heizelement nach Anspruch 1, **dadurch gekennzeichnet, dass** der Schmelzkleber in einem Punkt- oder Linienmuster auf dem Trägermaterial aufgebracht ist.

3. Heizelement nach Anspruch 1 oder 2 **dadurch gekennzeichnet, dass** die Kontaktleiterlitzen (3) wellenförmig, zickzackförmig oder mäanderförmig verlaufen.

4. Heizelement nach Anspruch 2 oder 3, **dadurch gekennzeichnet, dass** benachbarte Punkte oder Linien des Schmelzklebers in einem Abstand voneinander beabstandet sind, der geringer als der Durchmesser der Kontaktleiterlitzen (3) ist.

5. Heizelement nach einem der Ansprüche 1 bis 4, **dadurch gekennzeichnet, dass** jede Kontaktleiterlitzenlitze (3) aus 10 bis 200 Einzelfilamenten zusammengesetzt ist.

6. Heizelement nach einem der Ansprüche 1 bis 5, **dadurch gekennzeichnet, dass** als Schmelzkleber ein Polyester- und/oder ein Polyamid-Kleber eingesetzt ist.

7. Verfahren zur Herstellung eines Heizelements, insbesondere für Fahrzeugsitze oder Lenkräder, aus einem textilen, flexiblen Trägermaterial, auf dem mindestens zwei sich gegenüberliegende, elektrisch leitfähige Kontaktleisten jeweils aus mindestens zwei zueinander beabstandeten Kontaktleiterlitzen angeordnet werden und auf dem mehrere sich zwischen den Kontaktleisten erstreckende und mit diesen elektrisch verbundene Heizleiter in einem vorgegebenen Muster auf das Trägermaterial zwischen den gegenüberliegenden Kontaktleisten und über die Kontaktleiterlitzen verlaufend mittels Wirk- oder Nähwirktechnik aufgebracht werden, wobei die Heizleiter durch Maschenfäden im Bereich der Kontaktleiterlitzen an diese angedrückt werden,
**gekennzeichnet durch**
Bereitstellen eines Trägermaterials, bei dem zumindest im Bereich der aufzubringenden Kontaktleiterlitzen ein punkt- oder linienförmiges Muster aus Schmelzkleber aufgebracht ist,
Auflegen der Kontaktleiterlitzen auf das Trägermaterial,
Andrücken der Kontaktleiterlitzen an das Trägermaterial,
Leiten von Strom **durch** die Kontaktleiterlitzen so, dass sich die Kontaktleiterlitzen aufheizen, bis der die Kontaktleiterlitzen berührende Schmelzkleber aufschmilzt,
Unterbrechung der Stromzuführung zu den Kontaktleiterlitzen,
Beibehalten des Andrückens der Kontaktleiterlitzen an das Trägermaterial bis der Schmelzkleber erstarrt ist, und anschließendes Aufbringen der Heizleiter.

8. Verfahren nach Anspruch 7, **dadurch gekennzeichnet, dass** die Kontaktleiterlitzen wellenförmig, zickzackförmig oder mäanderförmig auf dem Trägermaterial angeordnet werden.

9. Verfahren nach Anspruch 8, **dadurch gekennzeichnet, dass** mehrere jeweils parallel zueinander verlaufende Kontaktleiterlitzen auf das Trägermaterial aufgebracht werden und zusammen die Kontaktleiste bilden.

10. Verfahren nach Anspruch 8, **dadurch gekennzeichnet, dass** das Trägermaterial auf eine Unterlage aufgelegt wird, von unten durch das Trägermaterial Nadeln gesteckt werden, um die die Kontaktleiterlitzen auf der Oberseite des Trägermaterials wellenförmig, zickzackförmig oder mäanderförmig gelegt werden, und dass dann das Trägermaterial durch eine Druckplatte gegen die Unterlage gedrückt wird.

11. Verfahren nach einem der Ansprüche 7 bis 10, **dadurch gekennzeichnet, dass** benachbarte Punkte oder Linien des Schmelzklebers in einem Abstand voneinander angeordnet werden, der geringer als der Durchmesser der Kontaktleiterlitzen ist.

12. Verfahren nach einem der Ansprüche 7 bis 11, **dadurch gekennzeichnet, dass** als Schmelzkleber ein Polyester- und/oder Polyamid-Kleber eingesetzt ist.

13. Verfahren nach einem der Ansprüche 7 bis 12, **dadurch gekennzeichnet, dass** als Trägermaterial ein Gewebe, ein Gewirke oder ein Vlies eingesetzt wird.

14. Verfahren nach einem der Ansprüche 7 bis 13, **dadurch gekennzeichnet, dass** die jeweilige Kontaktleiterlitze, nachdem sie auf das Trägermaterial aufgelegt ist und bevor Strom hindurchgeleitet wird, in einer vorbestimmten Länge abgeschnitten wird und an den abgeschnittenen Enden die Stromverbindung erfolgt.

15. Verfahren nach Anspruch 14, **dadurch gekennzeichnet, dass** die Kontaktleiterlitzen im Bereich ihrer Enden während des Andrückens an das Trägermaterial mit einer Wärmesenke zur Abfuhr von Wärme gedrückt werden, so dass dort auf dem Trägermaterial befindlicher Schmelzkleber nicht aufschmilzt, wobei vorzugsweise als Wärmesenke eine Metallplatte aufgelegt wird.

16. Verfahren nach einem der Ansprüche 7 bis 15, **dadurch gekennzeichnet, dass** nach Aufbringen der Heizleiter eine Decklage auf Heizleiter und Kontaktleiterlitzen aufgebracht wird und unter Zufuhr von Wärme und unter Aufschmelzen des Schmelzklebers die Decklage mit dem Trägermaterial verbunden wird.

## Claims

1. A heating element for vehicle seats or steering wheels with a textile flexible carrier material, having arranged thereon opposite contact strips consisting of at least two contact conductors lacings spaced apart from each other and a plurality of heating conductors that extend between said lacings and are in electrical contact therewith and are attached using a wrap knitting or stitch-bonding technique, and wherein the plurality of heating conductors (5) are pressed by knitting threads in the area of the contact conductor lacings (3) against said lacings, **characterized in that** the individual contact conductor lacings (3) are affixed directly onto the carrier material (2) by means of a hot-melt adhesive applied to the carrier material.

2. The heating element according to claim 1, **characterized in that** the hot-melt adhesive is applied in a point or line pattern to the carrier material.

3. The heating element according to claim 1 or 2, **characterized in that** the contact conductor lacings (3) extend in wave-like, zigzag-like or meander-like fashion.

4. The heating element according to claim 2 or 3, **characterized in that** neighboring points or lines of the hot-melt adhesive are spaced apart from one another at a distance that is smaller than the diameter of the contact conductor lacings (3).

5. The heating element according to any one of claims 1 to 4, **characterized in that** each contact conductor lacing (3) is composed of 10 to 200 individual filaments.

6. The heating element according to any one of claims 1 to 5, **characterized in that** a polyester and/or a polyamide adhesive is used as the hot-melt adhesive.

7. A method for producing a heating element, particularly for vehicle seats or steering wheels, consisting of a textile flexible carrier material on which at least two opposite, electrically conductive contact strips are arranged, each consisting of at least two contact conductor lacings that are spaced apart from each other, and on which a plurality of heating conductors extending between the contact strips and electrically connected to said strips are attached, using a wrap knitting or stitch-bonding technique, in a predetermined pattern to the carrier material to extend between the opposite contact strips and over the contact conductor lacings, the heating conductors being pressed by knitting threads in the area of the contact conductor lacings against said lacings,
**characterized by**
providing a carrier material in the case of which a point- or line-shaped pattern of hot-melt adhesive is applied at least in the area of the contact conductor lacings to be attached,
placing the contact conductor lacings on the carrier material,
pressing the contact conductor lacings against the carrier material, conducting current through the contact conductor lacings such that the contact conductor lacings are heated up until the hot-melt adhesive contacting the contact conductor lacings fuses,
interrupting the current supply to the contact conductor lacings,
maintaining the press contact of the contact conductor lacings on the carrier material until the hot-melt adhesive has solidified, and subsequently attaching the heating conductors.

8. The method according to claim 1, **characterized in that** the contact conductor lacings are arranged on the carrier material in a wave-like, zigzag-like or meander-like configuration.

9. The method according to claim 8, **characterized in that** a plurality of contact conductor lacings each extending in parallel with one another are attached to the carrier material to jointly form the contact strip.

10. The method according to claim 8, **characterized in that** the carrier material is attached to a substrate, needles are inserted from below through the carrier material, around which needles the contact conductor lacings are laid on the top side of the carrier material in wave-like, zigzag-like or meander-like fashion, and that the carrier material is then pressed by a pressure plate against the substrate.

11. The method according to any one of claims 7 to 10, **characterized in that** neighboring points or lines of the hot-melt adhesive are spaced apart from one another at a distance that is smaller than the diameter of the contact conductor lacings.

12. The method according to any one of claims 7 to 11, **characterized in that** a polyester and/or polyamide adhesive is used as the hot-melt adhesive.

13. The method according to any one of claims 7 to 12, **characterized in that** a cloth, a knitted fabric or a nonwoven is used as the carrier material.

14. The method according to any one of claims 7 to 13, **characterized in that** the respective contact conductor lacing is cut off at a predetermined length after it has been laid on the carrier material and before current is conducted therethrough, and the current connection is established at the cut-off ends.

15. The method according to claim 14, **characterized in that** in the area of their ends the contact conductor lacings are pressed while being pressed against the carrier material with a heat sink so as to discharge heat, so that hot-melt adhesive positioned there on the carrier material does not fuse, with a metal plate being preferably placed as a heat sink.

16. The method according to any one of claims 7 to 15, **characterized in that** after attachment of the heating conductors a cover layer is placed on heating conductors and contact conductor lacings and the cover layer is connected to the carrier material under supply of heat and fusion of the hot-melt adhesive.

## Revendications

1. Elément de chauffage pour sièges de véhicule ou volants avec un matériau support flexible textile, sur lequel sont disposées des barres de contact opposées se composant d'au moins deux torons conducteurs de contact espacés et plusieurs conducteurs de chauffage s'étendant entre ces derniers et placés avec ces derniers en contact électrique par technique de couture ou de tricotage et les plusieurs conducteurs de chauffage (5) étant pressés par des fils de maille dans la zone des torons conducteurs de contact (3), contre ces derniers, **caractérisé en ce que** les torons conducteurs de contact (3) sont collés directement sur le matériau support (2).

2. Elément de chauffage selon la revendication 1, **caractérisé en ce que** la colle thermofusible est appliquée par points ou lignes sur le matériau support.

3. Elément de chauffage selon la revendication 1 ou 2, **caractérisé en ce que** les torons conducteurs de chauffage (3) s'étendent sous forme ondulée, en zigzag ou en méandre.

4. Elément de chauffage selon la revendication 2 ou 3, **caractérisé en ce que** des points ou lignes voisins de la colle thermofusible sont disposés à une distance les uns des autres qui est inférieure au diamètre des torons conducteurs de contact (3).

5. Elément de chauffage selon l'une des revendications 1 à 4, **caractérisé en ce que** chaque toron conducteur de contact (3) se compose de 10 à 200 filaments.

6. Elément de chauffage selon l'une des revendications 1 à 5, **caractérisé en ce qu'**on utilise en tant que colle thermofusible une colle polyester et/ou polyamide.

7. Procédé pour la fabrication d'un élément de chauffage, en particulier pour sièges de véhicule ou volants en matériau support textile, flexible sur lequel sont disposées au moins deux barres de contact opposées électriquement conductrices composées respectivement de deux torons conducteurs de contact espacés et sur lequel sont appliqués plusieurs conducteurs de chauffage s'étendant entre les barres de contact et placés avec ces dernières en contact électrique selon un modèle prédéfini sur le matériau support entre les barres de contact opposées et s'étendant au-dessus des torons conducteurs de contact par technique de couture ou de tricotage et les conducteurs de chauffage étant pressés par des fils de maille dans la zone des torons conducteurs de contact contre ces derniers,
**caractérisé par**
la mise à disposition d'un matériau support où au moins dans la zone des torons conducteurs de contact à appliquer, il est appliqué une colle thermofusible selon un modèle de points ou de lignes,
le placement des torons conducteurs de contact sur le matériau support, la compression des conducteurs de contact sur le matériau support,
la conduction du courant par les torons conducteurs de contact de sorte que les torons conducteurs de contact chauffent jusqu'à ce que la colle thermofusible en contact avec les torons conducteurs de contact fonde,
l'interruption de l'amenée de courant aux torons conducteurs de contact, le maintien de la pression des torons conducteurs de contact contre le matériau support jusqu'à ce que la colle thermofusible se solidifie et ensuite application des conducteurs de chauffage.

8. Procédé selon la revendication 7, **caractérisé en ce que** les torons conducteurs de chauffage sont disposés sous forme ondulée, en zigzag ou en méandre sur le matériau support.

9. Procédé selon la revendication 8, **caractérisé en ce que** plusieurs torons conducteurs de contact s'étendant parallèlement entre eux sont appliqués sur le matériau support et forment ensemble la barre de contact.

10. Procédé selon la revendication 10, **caractérisé en ce que** matériau support est placé sur une base, des aiguilles sont insérées par le bas à travers le matériau support, aiguilles autour desquelles sont placés les torons conducteurs de contact sur la face supérieure du matériau support sous forme ondulée, en zigzag ou méandre et **en ce qu'**ensuite le matériau support est pressé par une plaque de pression contre la base.

11. Procédé selon l'une des revendications 7 à 10, **caractérisé en ce que** des points ou lignes voisins de la colle thermofusible sont disposés à une distance les uns des autres qui est inférieure au diamètre des torons conducteurs de contact.

12. Procédé selon l'une des revendications 7 à 11, **caractérisé en ce qu'**on utilise en tant que colle thermofusible une colle polyester et/ou polyamide.

13. Procédé selon l'une des revendications 7 à 12, **caractérisé en ce qu'**on utilise en tant que matériau support un tissu, un tricot ou un non tissé.

14. Procédé selon l'une des revendications 7 à 13, **caractérisé en ce que** les torons respectifs conducteurs de contact une fois placés sur le matériau support et avant la traversée du courant sont découpés à une longueur prédéfinie et la connexion de courant s'effectue aux extrémités coupées.

15. Procédé selon la revendication 14, **caractérisé en ce que** les torons conducteurs de contact sont pressés dans la zone de leurs extrémités pendant la compression contre le matériau support avec un puits thermique pour l'évacuation de la chaleur de sorte que la colle thermofusible se trouvant sur le matériau support ne fonde pas de préférence une plaque métallique faisant office de puits thermique étant placée.

16. Procédé selon l'une des revendications 7 à 15, **caractérisé en ce qu'**après application des conducteurs de chaleur, il est appliqué une couche de recouvrement sur les conducteurs de chauffage et les torons conducteurs de contact et la couche de recouvrement est reliée au matériau support par amenée de la chaleur et par fusion de la colle thermofusible.
